# EUROPEAN PATENT APPLICATION

(11) **EP 1 655 939 A1**
(43) Date of publication of application: **10.05.2006**
(21) Application number: 05110275.4
(22) Date of filing: 02.11.2005
(51) Int. Cl.: H04M 11/04, G08B 25/08, H04M 1/677

(54) **Emergency facsimile messaging apparatus and method**

(30) Priority: 03.11.2004 KR 2004088897
(71) Applicant: Samsung Electronics Co., Ltd., Yeongtong-gu Suwon-city, Gyeonggi-do 442-742 (KR)
(72) Inventor: Han, Chang-min, Gyeonggi-do (KR)
(74) Representative: Walaski, Jan Filip

(57) **Abstract**

A facsimile machine has a key input part having a plurality of operation keys, a communication unit for communicating data with an exterior facsimile, a storage unit for storing an emergency message and at least one facsimile number, and a control unit for reading out the emergency message from the storage unit as any operation key is selected from a plurality of operation keys on the key input part in an emergency notice mode. The control unit further directs the communications unit to transmit the emergency message to at least one registered facsimile number. Thus, even a person who has a poor recognition of a telephone number or numbers and requires care by other people, can easily send out an emergency message to a guardian at a remote place by a simple key operation.

## Description

The present invention relates to emergency messaging. More particularly, the present invention relates to a facsimile apparatus and a method of controlling a facsimile apparatus which can issue an emergency message with a simple key operation.

Generally, a facsimile machine consists of a scanner for reading a document, a printer for printing data, and a communication means for transmitting and receiving data, such as from a remote facsimile machine over a telephone line connected to a public telephone network. Typically, the components of a facsimile machine are integrated in one system to exchange documents. The facsimile machine has a telephony function which transmits and receives audio and non-audio data to and from the exterior facsimile machine connected to the telephone line.

When it is desired to communicate with a certain person by use of a communication terminal, such as a telephone or a facsimile machine having a telephony function, a user needs to know the telephone number of the counterpart communication terminal. However, one may not be able to make a phone call even if one knows the telephone number, especially when the user is not fully aware of how to use, or is incapable of using, the communication terminal. For example, it is difficult for individuals to make a phone call if they are not familiar with the use of, or incapable of using, telephone numbers, such as children, the illiterate, the blind, and the elderly.

Accordingly, when people such as children or the elderly, who may have difficulty in understanding or recognizing numbers, are home alone, an improved capability is required to enable them to send an emergency message on a telephone line to their guardian or neighbour.

The present invention aims to address the above problems.

According to the invention, there is provided apparatus comprising a key input part having a plurality of operation keys, a communication unit for communicating data over a communication channel, a memory for storing an emergency message and a destination address and a control unit for controlling the apparatus, wherein the apparatus is operable in an emergency message mode in which the control unit is arranged to read the emergency message from the memory in response to selection of one of the plurality of operation keys, and to control the communication unit to transmit the emergency message to the stored destination address.

The apparatus may comprise a facsimile machine or a multi-function device having a facsimile transmission capability, and the destination address may be the fax number of an external fax machine, or for example, an e-mail address for an external computer.

The present invention provides a method and apparatus for issuing an emergency message using a simple key operation with a facsimile machine. Therefore, an object of the present invention is to provide a facsimile having a function of automatically sending out an emergency message to a registered facsimile number with a simple key operation.

In furtherance of the above-described object, aspects of the present invention provide a facsimile machine comprising a key input part having a plurality of operation keys, a communication unit for communicating data with an exterior facsimile machine, a storage unit for storing an emergency message and at least one facsimile machine number, and a control unit for reading out an emergency message from the storage unit in response to selection of any one operation key among a plurality of operation keys on the key input part. The control unit further directs the communication unit to transmit the emergency message to the at least one facsimile machine number registered with the storage unit.

The emergency message and the at least one facsimile machine number may be input by the key input part.

The facsimile machine may further comprise a ring detection unit for detecting a ring signal from the exterior facsimile machine, and an identification code detection unit for detecting, in response to the ring signal, an identification code included in a signal transmitted from the exterior facsimile machine. The control unit extracts at least one facsimile machine number included in the identification code to register with the storage unit if it is determined that a setting key for setting the emergency notice mode is included in the identification code.

The control unit may also direct the communication unit to transmit a signal noticing completion of facsimile machine number registration to the exterior facsimile machine when the at least one facsimile number is completely registered.

In furtherance of the above-described object, aspects of the present invention provide a method of controlling a facsimile machine comprising storing an emergency message and at least one facsimile machine number, setting an operation mode of the facsimile machine to an emergency notice mode, reading out a stored emergency message when any one of a plurality of operation keys of the facsimile machine is selected under the emergency notice mode, and transmitting the emergency message to the at least one facsimile machine number registered with the storage.

The emergency notice mode setting step may comprise detecting a ring signal from an exterior facsimile machine, and determining, in response to the ring signal, if a setting key for setting the emergency notice mode is included in an identification code transmitted from the exterior facsimile machine.

The method may further comprise extracting at least one facsimile machine number transmitted from the exterior facsimile if a setting key is included in the identification code. The method also provides for registering the at least one facsimile machine number.

The above and other aspects and features of the present invention will become more apparent by describing certain exemplary embodiments of the present invention with reference to the accompanying drawings, in which:
Figure 1 illustrates a schematic block diagram of a facsimile machine having an emergency message function according to an embodiment of the present invention;
Figure 2 shows a flowchart of operations for setting an emergency notice mode according to an aspect of the present invention;
Figure 3 shows a flowchart of operations for setting an emergency notice mode according to another aspect of the present invention; and
Figure 4 shows a flowchart of operations when an emergency notice mode is set according to an embodiment of the present invention.

Throughout the drawings, like reference numbers should be understood to refer to like elements, features and structures.

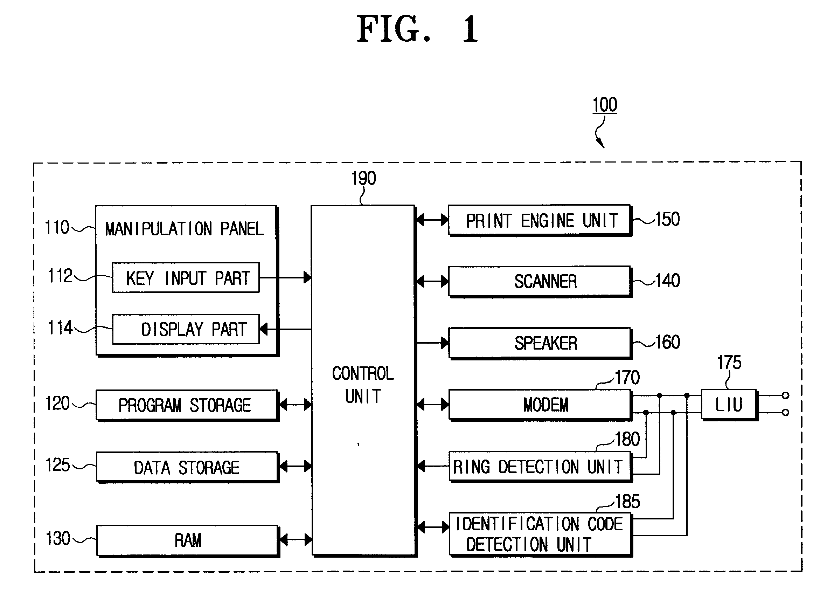

Figure 1 illustrates a block diagram of a facsimile machine having an emergency message function according to an embodiment of the present invention. Referring to Figure 1, a facsimile machine 100 according to an embodiment of the present invention comprises a manipulation panel 110, program storage unit 120, data storage 125, RAM 130, scanner 140, print engine unit 150, speaker 160, modem 170, LIU (line interface unit) 175, ring detection unit 180, identification code detection unit 185, and control unit 190.

The manipulation panel 110 comprises key input part 112 and display part 114. The key input part 112 has a plurality of operation keys for selecting and setting functions of facsimile machine 100, and outputs a key operation signal to control unit 190. The key input part 112 can comprise, for example, a number key, a letter key, and a mode selection key for setting an emergency message mode.

Display part 114 comprises a LCD (Liquid Crystal Display), and shows an operation status of facsimile machine 100 according to control part 190.

Program storage unit 120 stores various programs necessary for implementing functions of the facsimile machine 100 thereon.

Data storage 125 stores at least one facsimile machine number registered by a user and an emergency message to be transmitted to the registered facsimile number. The facsimile machine number registered on data storage 125 may be a facsimile machine number for a location from which the user originates or an emergency relief organization, such as a hospital or fire station. The facsimile machine number may be input using a plurality of number keys on the key input part 112, or registered by using a facsimile machine or telephone of the place from which the user originates.

RAM 130 stores various data created during the operation of facsimile machine 100. For example, image data read by scanner 140, which will be explained below, and facsimile data transmitted from an exterior facsimile machine, are temporarily stored to RAM 130.

Scanner 140 scans a document, converting the contents into image data, and provides control unit 190 with the data. The image data is printed by print engine unit 150 according to control unit 190, or transmitted via modem 170 to an exterior facsimile machine.

Print engine unit 150 prints data according to control unit 190.

Speaker 160 generates an alarm when a ring signal is received from a PSTN (public switching telephone network) device, or receiving/transmitting of facsimile data or printing by the print engine unit 150 is terminated.

According to control unit 190, modem 170 modulates data to an analog form through LIU 175 to send out to an exterior facsimile machine, and modem 170 demodulates data to a digital form through LIU 175 to print data when the data is received from an exterior facsimile machine. LIU 175 forms a communication loop with the PSTN in a telephone line to couple the signal between modem 170 and the PSTN.

Ring detection unit 180 detects a ring received in a telephone line to offer to control unit 190.

In response to the receiving ring, identification code detection unit 185 detects the identification code transmitted from the exterior facsimile machine according to control unit 190 so as to offer the code to control unit 190. The identification code detected by identification code detection unit 185 comprises a setting key, for example #3#, for setting an emergency notice mode, and a termination key, for example #4#, for terminating registration of facsimile numbers.

Control unit 190 controls general operations of facsimile machine 100 according to various control programs stored within program storage unit 120. For example, use of control unit 190 for setting an emergency notice mode according to an embodiment of the present invention will be described in brief hereinafter. First, if a mode selection key signal is received for setting an emergency notice mode from key input part 112 in response to the mode selection key signal, control unit 190 registers on data storage 125 at least one facsimile machine number received from key input part 112 to set an operation mode of facsimile machine 100 to an emergency notice mode.

Control unit 190 directs identification code detection unit 185 to detect the identification code transmitted from an exterior facsimile machine together with the ring when a ring detection signal is received from ring detection unit 180. If the identification code detected by identification code detection unit 185 contains the setting key setting an emergency notice mode, control unit 190 extracts at least one facsimile machine number included in the identification code to register on data storage 125, and then sets emergency notice mode. As described above, according to an embodiment of the present invention, it is possible to set the emergency notice mode by the key input part 112, by exterior facsimile machine or by telephone at a remote place.

If at least one or a certain operation key among a plurality of operation keys on key input part 112 is selected while the emergency notice mode is set as described above, control unit 190 reads out an emergency message stored at data storage 125. Control unit 190 controls modem 170 and LIU 175 to transmit the emergency message to at least one facsimile machine number registered on data storage 125.

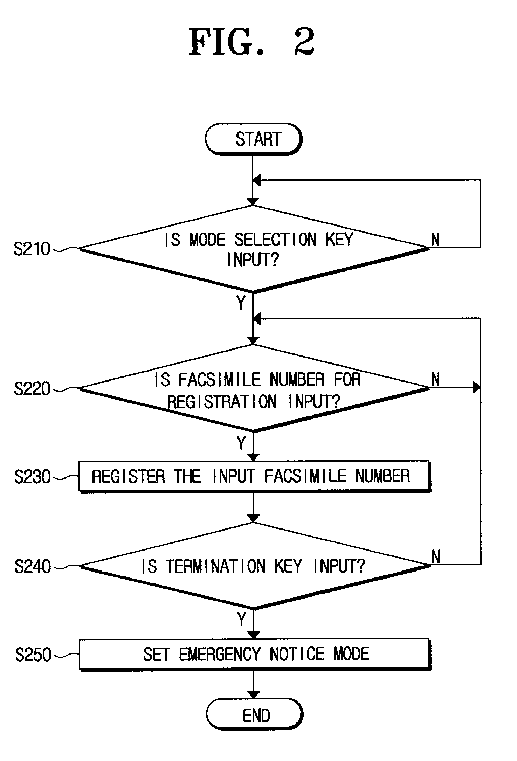

Hereinafter, the control of facsimile operations according to an embodiment of the present invention will be explained with reference to Figures 2 to 4.

Figure 2 shows a flowchart of the steps for setting an emergency notice mode according to an exemplary aspect of the present invention. Referring to Figure 2, control unit 190 determines if a mode selection key signal from key input part 112 is input to set an emergency notice mode (S210). If so, control unit 190 determines if a facsimile machine number to be registered is input by key input part 112 (S220). If there is at least one facsimile machine number input by key input part 112, control unit 190 registers the facsimile machine number on data storage 125 (S230). If the termination key signal is input from the key input part 112 to terminate registration of facsimile machine number (S240), control unit 190 sets the facsimile machine 100 to emergency notice mode (S250).

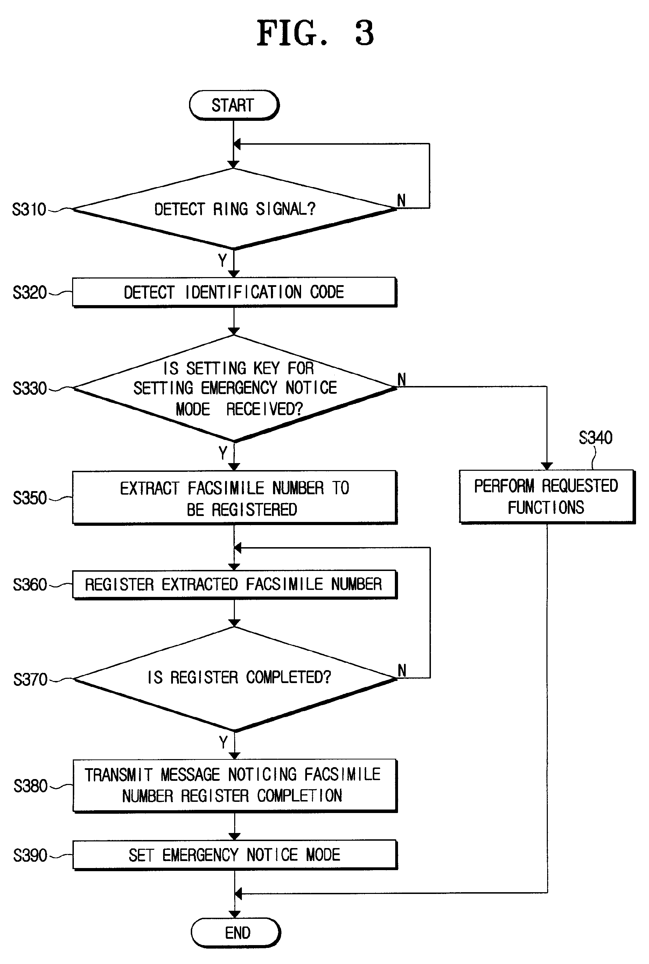

Figure 3 shows a flowchart of the steps for setting an emergency message mode according to another exemplary aspect of the present invention. Referring to Figure 3, if the ring detection signal from ring detection unit 180 is received (S310), control unit 190 directs the identification code detection unit 185 to detect the identification code together with the ring signal transmitted from the exterior facsimile machine. Control unit 190 determines if the detected identification code contains the setting key (#3#) for setting the emergency notice mode (S330).
If the detected identification code does not contain the setting key (#3#) in step of S330, control unit 190 performs functions according to requests of the exterior facsimile (S340). Accordingly, control unit 190 operates facsimile machine 100 in a telephone communications mode if a signal requesting telephone communication is received from the exterior facsimile machine. Control unit 190 operates facsimile machine 100 in a facsimile data receiving mode if a signal for transmitting facsimile data is received from the exterior facsimile.

On the other hand, if determining that the detected identification code contains setting key (#3#) in the step of S330, control unit 190 accordingly extracts at least one facsimile machine number input in response to the setting key signal (S350). The control unit 190 registers the facsimile machine number extracted in step S350 on data storage 125 (S360).

When registration of the facsimile machine number is completed (S370), control unit 190 transmits a facsimile machine registration complete message to the exterior facsimile machine responsible for transmitting the emergency notice mode setting request signal (S380). The message to the exterior facsimile machine may be "facsimile machine number registration is complete." Or the message may be a certain key, such as #5#, to indicate completion of facsimile machine number registration r, as well as setting key (#3#) to set the emergency notice mode. The exterior facsimile machine, upon receiving notice of facsimile number registration completion, displays the received message on display part 114, or rings in response to a certain key receipt to notify a user about the facsimile machine number registration.

Control unit 190 transmits the facsimile machine number registration message to the exterior facsimile machine, then blocks the communication loop to the exterior facsimile machine. Control unit 190 then sets facsimile machine 100 to the emergency notice mode (S390).

As shown in Figure 3, when the emergency notice mode is set from the outside, a user first uses the exterior facsimile machine at the remote location to place the call. When a telecommunications path with the facsimile machine is formed, the facsimile number to be registered is input with the setting key, such as #3#, to set the emergency notice mode. A termination key, such as #4#, is input to terminate the facsimile number registration.

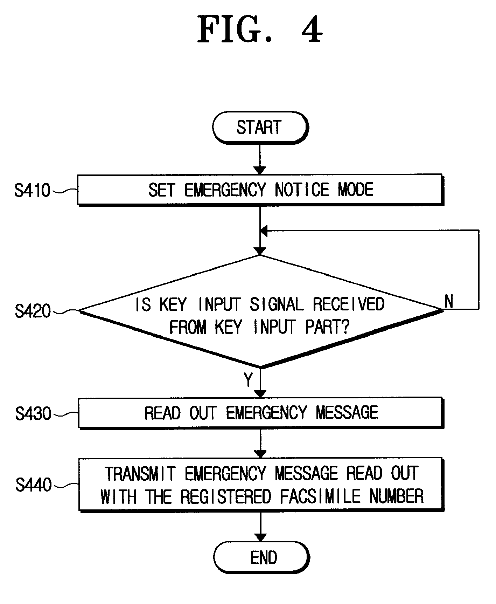

Figure 4 shows a flowchart of the steps carried out once the emergency notice mode is set. Referring to Figure 4, if the operation mode of facsimile machine 100 is set to the emergency notice mode (S410), control unit 190 determines if the key operation signal is received from key input part 112 (S420). If so, control unit 190 reads out the registered emergency message from data storage 125 (S430).

Control unit 190 converts the read emergency message into facsimile data transmittable to an exterior facsimile machine. Control unit 190 directs modem 170 and LIU 175 to sequentially transmit the facsimile data in response to the emergency message to the facsimile machine number registered on data storage 125 (S440). Control unit 190 may prevent ringing or displaying of the message showing transmission of the emergency message.

As described above, a remote user can set the operation mode of the facsimile machine at home or work to the emergency notice mode according to embodiments of the present invention. When the emergency notice mode is set, the emergency message is automatically transmitted to the registered facsimile number by simply pressing any one of a plurality of operation keys on the facsimile machine. Therefore, it is possible for a user who has a poor recognition of telephone numbers to send out an emergency message to a remote guardian.

While the invention has been shown and described with reference to certain exemplary embodiments thereof, it will be understood by those skilled in the art that various changes in form and details may be made therein without departing from the scope of the invention as defined by the appended claims.

## Claims

1. Apparatus comprising:
a key input part having a plurality of operation keys;
a communication unit for communicating data over a communication channel;
a memory for storing an emergency message and a destination address; and
a control unit for controlling the apparatus, wherein
the apparatus is operable in an emergency message mode in which the control unit is arranged to read the emergency message from the memory in response to selection of one of the plurality of operation keys, and to control the communication unit to transmit the emergency message to the stored destination address.

2. Apparatus according to claim 1, wherein the destination address comprises a facsimile machine number for an external facsimile machine that is accessible over the communication channel.

3. Apparatus as claimed in claim 2, wherein the emergency message and the facsimile machine number is input via the key input part.

4. Apparatus according to any one of the preceding claims, further comprising:
a ring detection unit for detecting a ring signal from an external apparatus; and
an identification code detection unit for detecting, in response to the ring signal, an identification code included in a signal transmitted from the external apparatus,
wherein the control unit extracts at least one facsimile machine number included in the identification code to register the number in the memory if it is determined that a setting key for setting the emergency message mode is included in the identification code.

5. Apparatus according to claim 4, wherein the control unit directs the communications unit to transmit a signal notifying completion of registration to the external apparatus when the at least one facsimile machine number is completely registered.

6. Apparatus according to claim 4 or 5, wherein the external apparatus comprises a facsimile machine or a telephone.

7. A method of controlling a facsimile apparatus, the method comprising:
storing an emergency message and a destination address;
setting an operation mode of the facsimile apparatus to an emergency message mode;
reading out the stored emergency message when any one of a plurality of operation keys of the facsimile apparatus is selected in the emergency message mode; and
transmitting the emergency message to the destination address.

8. A method according to claim 7, wherein the destination address comprises at least one facsimile machine number.

9. A method according to claim 8, wherein setting the emergency notice mode comprises:
detecting a ring signal from an external apparatus; and
determining, in response to the ring signal, if a setting key for setting the emergency notice mode is included in an identification code transmitted from the external apparatus.

10. A method according to claim 9, further comprising:
extracting at least one destination address transmitted from the external apparatus if the setting key is included in the identification code; and
registering the at least one destination address.

11. A method according to claim 10, wherein the destination address comprises a facsimile machine number.

12. A computer program which, when executed on a computer, is arranged to carry out the method of any one of claims 7 to 11.
